# EUROPÄISCHE PATENTSCHRIFT

(11) **EP 0 637 710 B1**
(45) Veröffentlichungstag und Bekanntmachung des Hinweises auf die Patenterteilung: **27.12.1995**
(21) Anmeldenummer: 94109467.4
(22) Anmeldetag: 20.06.1994
(51) Int. Cl.: F16K 21/10, F16K 21/12

(54) **Selbstschlussventil**
Self-closing valve
Vanne à fermeture automatique

(30) Priorität: 10.07.1993 DE 4323063
(43) Veröffentlichungstag der Anmeldung: 08.02.1995
(73) Patentinhaber: FRIEDRICH GROHE AKTIENGESELLSCHAFT, D-58675 Hemer (DE)
(72) Erfinder: Körfgen, Harald, D-58730 Fröndenberg (DE); Karakullukcu, Ali, D-58706 Menden (DE)

(56) Entgegenhaltungen:
- GB-A- 1 368 214
- US-A- 3 965 922
- US-A- 4 899 778

## Beschreibung

Die Erfindung betrifft ein Selbstschlußventil zur Wasserauslaufsteuerung, insbesondere für sanitäre Einrichtungen, mit einem in einen Armaturenkörper einsetzbaren Gehäuse, in welchem ein Hauptventil und ein Steuerventil vorgesehen ist und das Hauptventil mit Hilfe einer Feder in Schließstellung gestrammt ist, wobei
- als Verzögerungsglied ein mit dem Verschlußglied des Hauptventils verbundener Kolben in einem an der einen Stirnseite mit einem Boden verschlossenen Zylinder gedichtet verschiebbar angeordnet ist,
- in dem Verbindungsstück zwischen dem Verschlußglied und dem Kolben ein Steuerkanal zum Zuflußkanal des Armaturenkörpers ausgebildet ist, der über das Steuerventil durch den Kolben in den Zylinder geführt ist, und parallel neben dem Steuerkanal eine Drosseldüse im Kolben vorgesehen ist, die mit dem Abflußkanal des Armaturenkörpers in Verbindung steht,
- das Steuerventil mit einem axial gegen die Kraft einer Rückstellfeder verschiebbaren Stößel betätigbar ist.

Ein derartiges Ventil ist aus der US-Patentschrift Nr. 4,899,778 bekannt. Bei dem bekannten Ventil ist es nicht möglich, daß vom Benutzer während des vom Verzögerungsglied gesteuerten Zeitraumes der Ventilöffnung, diese vorzeitig abgebrochen werden kann, so daß auch bei nicht mehr benötigtem Wasserauslauf über die eingestellte Zeitdauer in unerwünschter Weise nicht benötigtes Trinkwasser in den Abwasserkanal fließt.
Außerdem ist bei der bekannten Einrichtung die Ventilkartusche nur zugänglich, wenn das Druckwasser in der Versorgungsleitung abgestellt ist, da bei gelöstem Kopfteil die Ventilkartusche lose im Armaturenkörper angeordnet ist und vom Druckwasser herausgedrückt werden würde.

Der Erfindung liegt die Aufgabe zugrunde, das eingangs angegebene Selbstschlußventil zu verbessern.
Diese Aufgabe wird erfindungsgemäß dadurch gelöst, daß im Boden des Zylinders ein Bypassventil vorgesehen ist, das mit einem Einschieben des Stößels zu öffnen ist, wobei das Bypassventil über einen oder mehrere Kanäle mit dem Abflußkanal des Armaturenkörpers verbunden ist.
Weitere Ausgestaltungen der Erfindung sind in den Ansprüchen 2 bis 13 angegeben.

Die mit der Erfindung erzielbaren Vorteile bestehen insbesondere darin, daß mit einfachen Mitteln eine vom Benutzer betätigbare, vorzeitige Laufzeitunterbrechung ermöglicht wird, wobei diese über das einzige Griffstück durch ein Antippen oder geringfügiges Einschieben ausgelöst werden kann.
In weiterer Ausgestaltung der Erfindung kann vorteilhaft die Zeitdauereinstellung des Verzögerungsgliedes durch eine Drehbewegung des Griffstücks ermöglicht werden. Hierbei kann zweckmäßig ein im Griffstück vorgesehener Gewindestift so positioniert werden, daß er durch ein Verschieben des Griffstücks in eine Öffnung der Stellschraube einbringbar ist, so daß in dieser Position durch ein Drehen des Griffstücks die Zeitdauer einstellbar ist. Ein Abnehmen des Griffstücks von dem Ventil ist zur Einstellung der Laufzeitdauer nicht mehr erforderlich.

Mit großem Vorteil kann auch das Gehäuse des Selbstschlußventils zweiteilig ausgebildet werden, wobei die beiden Ventilteile im Bereich des Durchmessersprunges, vorzugsweise mittels Gewinde, zusammenfügbar sind. Bei dieser Gehäuseausbildung kann der äußere Gehäuseteil mit dem Zylinder, der Stellschraube, dem Stößel und dem Griffstück als Baueinheit von dem Inneren in den Armaturenkörper eingeschraubten Gehäuseteil abgenommen werden, ohne daß das Druckwasser im Versorgungsleitungsbereich abgestellt werden muß. Bei abgenommenem äußeren Gehäuseteil sind hierbei das Steuerventil und der Kolben mit der Rückstellfeder unmittelbar zugänglich.
Zweckmäßig kann hierbei in dem Steuerkanal ein Steg als Prallplatte ausgebildet werden, so daß auch bei anstehendem Druckwasser das Steuerventil auswechselbar ist, ohne daß die strahlrohrartige Ausbildung des Steuerkanals in unerwünschter Weise zur Wirkung gelangen kann.

In weiterer Ausgestaltung der Erfindung ist das Griffstück vorteilhaft glockenförmig ausgebildet und umgreift mit seinem Mantel die Aussenfläche des zylindrischen äußeren Gehäuses. Zur vandalensicheren Halterung des Griffstücks auf dem Selbstschlußventil kann dieses vorteilhaft mit einem von der einen Stirnseite einschraubbaren Sicherungsring versehen werden, der mit einem an dem äußeren Gehäuseteil ausgebildeten umlaufenden Ringbund zusammenwirkt.

Ausführungsbeispiele der Erfindung sind in der Zeichnung dargestellt und werden im folgenden näher beschrieben. Es zeigt
- Figur 1: ein Selbstschlußventil im Längsschnitt, einmontiert in einem teilweise dargestellten Armaturenkörper einer Wasserauslaufarmatur in vergrößerter Darstellung;
- Figur 2: das in Figur 1 gezeigte Selbstschlußventil in der Schnittebene II;
- Figur 3: das in Figur 1 gezeigte Selbstschlußventil in der Schnittebene III;
- Figur 4: das in Figur 1 gezeigte Steuerventil im Längsschnitt in vergrößerter Darstellung;
- Figur 5: ein weiteres Selbstschlußventil im Längsschnitt, einmontiert in einem Armaturenkörper einer Wasserauslaufarmatur in vergrößerter Darstellung.

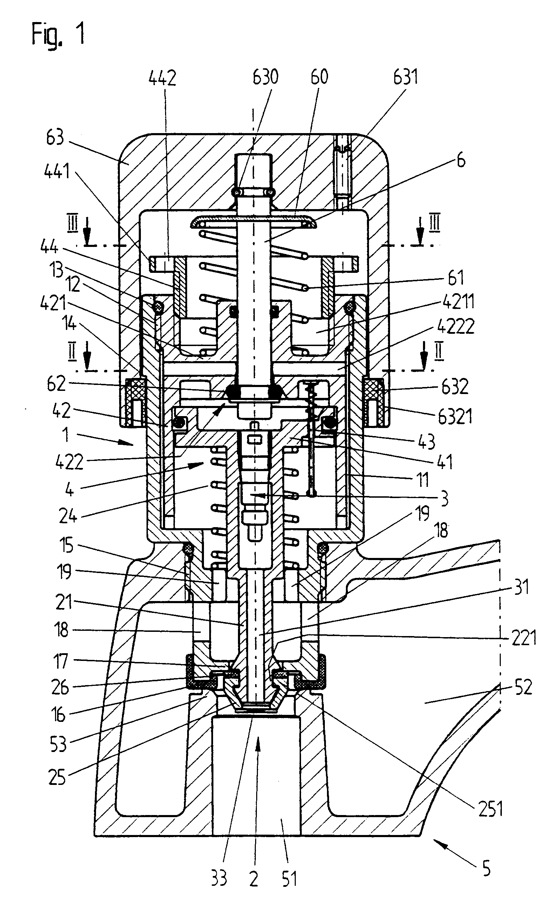

Der Einfachheit halber sind bei den Ausführungsbeispielen in der Zeichnung gleiche oder entsprechende Elemente mit jeweils gleichen Bezugszeichen versehen.
Das in der Zeichnung Figur 1 bis 4 gezeigte Selbstschlußventil ist als eine Baueinheit ausgeführt und in einem Armaturenkörper 5 einer Wasserauslaufarmatur eingesetzt. Der Armaturenkörper 5 ist hierbei mit einem Zuflußkanal 51 und einem Abflußkanal 52 für das Wasser versehen. Stromabwärts am Ende des Zuflußkanals 51 ist ein ringförmiger Ventilsitz 53 ausgebildet. Der Ventilsitz 53 kann auch für andere Ventileinsätze, wie beispielsweise genormte Niederschraubventiloberteile, verwendet werden.
Das Selbstschlußventil ist in einem rotationssymmetrisch und gestuft ausgebildeten Gehäuse 1 angeordnet, wobei der im Durchmesser sprungartig verjüngte Bereich mittels Gewinde 15 in einer koaxial über dem Ventilsitz 53 angeordneten Öffnung gedichtet eingeschraubt ist. Hierbei liegt die innere Stirnseite mit einer Dichtung 16 auf dem Ventilsitz 53 auf und führt somit den Zuflußkanal 51 gedichtet in das Gehäuse 1.

Das in dem Gehäuse 1 angeordnete Selbstschlußventil wird aus einem Hauptventil 2 und einem koaxial zu dem Hauptventil 2 angeordneten Steuerventil 3 gebildet, wobei mit dem Steuerventil 3 das Hauptventil 2 über einen mit dem Hauptventil 2 und einem Verbindungsstück 21 gekoppelten Kolben 41 betätigt wird. Das Steuerventil 3 ist über einen koaxial im Gehäuse 1 angeordneten Stößel 6 betätigbar.
Das Hauptventil 2 mit dem Kolben 41 wird von einer Feder 24 in Schließstellung gestrammt, wobei in der Schließstellung auch der anstehende Wasserdruck im Zuflußkanal 51 die Schließstellung unterstützt. Im äußeren Bereich des Gehäuses 1 ist außerdem ein Zylinder 42 mit einem Boden 421 mittels Gewinde 12 eingeschraubt und von einem Rundschnurring 13 gedichtet. In dem Zylinder 42 ist der Kolben 41 axial gedichtet verschiebbar angeordnet. Koaxial in dem Verbindungsstück 21 ist ein Steuerkanal 31 ausgebildet, in dem das Steuerventil 3 angeordnet ist, so daß von dem Steuerventil Druckwasser zwischen dem Boden 421 des Zylinders 42 und der Stirnseite des Kolbens 41 bei einer Öffnung des Steuerventils 3 einströmen kann. Mit Hilfe des Druckwassers kann somit der Kolben 41 axial entgegen der Kraft der Feder 24 verschoben und das Hauptventil 2 geöffnet werden. Andererseits wirkt der Kolben 41 mit der Feder 24 als Verzögerungsglied 4, wobei eine Drosseldüse 43 mit einem Reinigungsstab parallel neben dem Steuerkanal 31 vorgesehen ist. Mit Hilfe der Rückstellkraft der Feder 24 wird aus dem Raum zwischen dem Boden 421 und dem Kolben 41 das befindliche Wasser durch die Drosseldüse 43 gedrückt, welches anschließend in den Abflußkanal 52 des Armaturenkörpers abfließen kann, so daß eine durch die Drosseldüse 43 verzögerte Schließung des Hauptventils 2 erfolgt.
Das Hauptventil 2 wird hierbei von einem im Gehäuse 1 als Einziehung ausgebildeten Ventilsitz 17 und einer auf dem stromaufwärts gelegenen Endbereich des Verbindungsstücks 21 in eine Ringnut 221 aufgesprengte, einen Innenbund 251 aufweisende Kappe 25 als Verschlußglied gebildet. An der stromaufwärts gelegenen Stirnseite der Kappe 25 ist zum Schutz des relativ feinen Steuerventils 3 ein Sieb 33 angeordnet.

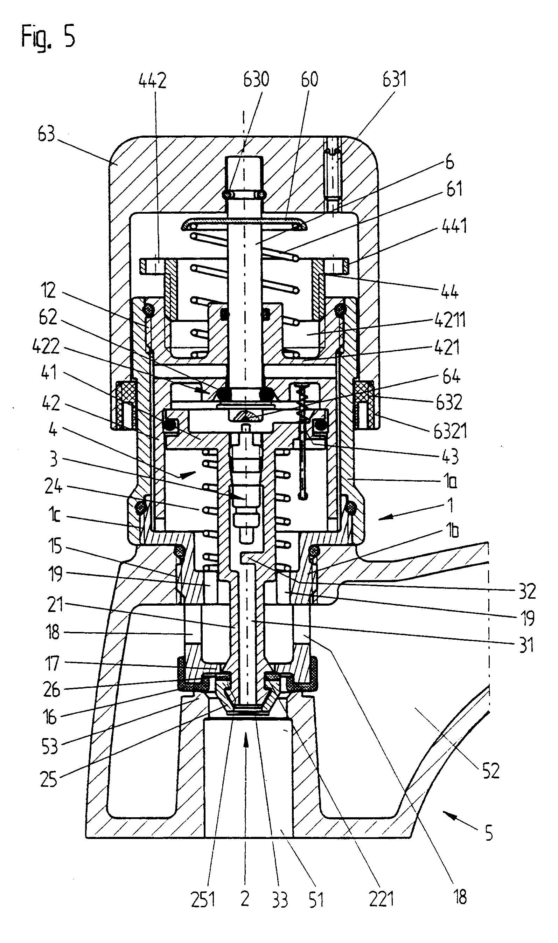

Das Steuerventil 3 besteht, wie es insbesondere aus Figur 4 zu entnehmen ist, aus einer Hülse 36, in der koaxial eine Ventilstange 34 mit einem Verschlußglied 35 und einer Rückstellfeder 37 angeordnet ist. Die Hülse 36 weist an dem einen Endbereich ein Einschraubgewinde 38 für die Befestigung in dem Verbindungsstück 21 auf. Zur Abdichtung des Steuerkanals 31 ist außerdem ein Dichtkegel 361 an dem Außenmantel der Hülse 36 angeformt. Als derartiges Steuerventil 3 hat sich ein im Handel erhältliches Fahrzeugluftreifenventil als besonders geeignet erwiesen.

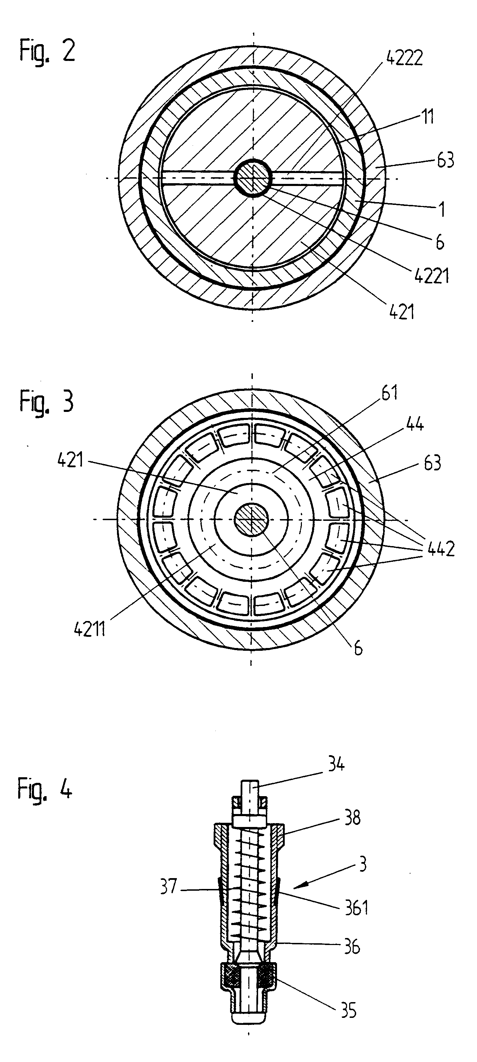

In dem Boden 421 des Zylinders 42 ist außerdem ein Bypassventil 422 vorgesehen, welches koaxial zum Stößel 6 angeordnet ist und über einen Ringkanal 4221 und Querbohrungen 4222 sowie einen Ringspalt 11 zwischen der Innenwandung des Gehäuses 1 und der Außenwandung des Zylinders 42 mit dem Abflußkanal 52 verbunden ist. Als Verschlußglied wirkt eine auf dem Stößel 6 angeordnete Dichtung 62, die in der Endposition das Bypassventil 422 absperrt. Bei der Auslegung des Bypassventils 422 hat es sich als vorteilhaft erwiesen, wenn der Außendurchmesser des Ringkanals 4221 etwa das 1,02fache des Durchmessers des Stößels 6 beträgt, wobei der Durchmesser des Kolbens 41 etwa dem fünffachen Durchmesser des Stößels 6 entspricht.
An der äußeren Stirnseite des Zylinders 42 ist eine Ringnut 4211 ausgebildet, in dessen Grund sich eine Rückstellfeder 61 abstützt und die über eine Tellerscheibe 60 den Stößel 6 mit der Dichtung 62 in Schließstellung des Bypassventils 422 strammt. Auf dem äußeren Bereich des Stößels 6 ist ein glockenförmiges Griffstück 63 mit einer Schnappverbindung 630 befestigt. An der äußeren Seitenwandung der Ringnut 4211 ist eine Stellschraube 44 mittels Gewinde gehaltert, wobei die Stellschraube 44 an der vorstehenden Stirnseite einen Ringbund 441 aufweist, in dem parallel zur Achse des Stößels 6 Öffnungen 442 angeordnet sind, wie es insbesondere aus Figur 3 der Zeichnung zu entnehmen ist. Durch die axiale Position der Stellschraube 44 kann die Eintauchtiefe des Stößels 6 bestimmt werden und damit die Öffnungszeitdauer des Selbstschlußventils. Koaxial zu den Öffnungen 442 ist in der Stirnwand des Griffstücks 63 ein Gewindestift 631 angeordnet. Das Griffstück 63 mit dem Stößel 6 ist zum Gehäuse 1 drehbar angeordnet, so daß mit Hilfe des durch den Boden des Griffstücks 63 zu schraubenden Gewindestifts 631 die Stellschraube 44 gedreht werden kann. Mit Hilfe des in den Boden des Griffstücks 63 zurückdrehbaren Gewindestifts 631 kann somit ohne Demontage des Griffstücks 63 die Laufzeit des Selbstschlußventils verändert werden. Der versenkt angeordnete Gewindestift 631 gewährleistet dabei außerdem, daß, insbesondere in öffentlichen Gebäuden, von den Benutzern nicht mutwillig die Zeitdauer verstellt werden kann (vandalensichere Zeitverstellung).
Damit das Griffstück 63 nicht unmittelbar von dem Stößel 6 abziehbar ist, ist zur Sicherung das glockenförmige Griffstück 63 am stirnseitigen Mantelbereich mit einem mittels Gewinde 6321 einschraubbaren Sicherungsring 632 versehen. Der Mantel des Griffstücks 63 umgreift hierbei in der Stecklage einen umlaufenden Ringbund 14 des Gehäuses 1, so daß nach dem Einschrauben des Sicherungsrings 632 in das Griffstück 63 der Sicherungsring 632 mit der Stirnseite des Ringbunds 14 zusammenwirkt und somit ein Abziehen des Griffstücks 63 verhindert.
Der Sicherungsring 632 kann auch geschlitzt ausgebildet werden, so daß er radial auf das Gehäuse 1 geschoben und anschließend in das Griffstück 63 geschraubt werden kann.

Das Selbstschlußventil hat folgende Funktionsweise:
In der in Figur 1 gezeigten Position befindet sich das Selbstschlußventil in Schließstellung. Wird nun vom Benutzer das Griffstück 63 gegen den Armaturenkörper 5 verschoben, so gelangt entgegen der Kraft der Rückstellfeder 61 der Stößel 6 gegen die Ventilstange 34 des Steuerventils 3 und öffnet das Steuerventil 3. Nunmehr strömt Wasser vom Zuflußkanal 51 über den Steuerkanal 31 und das Steuerventil 3 in den Raum zwischen dem Kolben 41 und dem Boden 421. Der Druck des zuströmenden Wassers bewirkt über die große Stirnfläche des Kolbens 41, daß der Kolben 41 und das Verbindungsstück 21 mit der als Verschlußglied wirkenden Kappe 25 und der Dichtscheibe 26 abwärts verschoben wird und somit das Hauptventil den Durchfluß freigibt, so daß nunmehr Wasser direkt vom Zuflußkanal 51 über Durchbrüche 18 in der Seitenwandung des Gehäuses 1 in den Abflußkanal 52 des Armaturenkörpers 5 überströmen kann. Hierbei ist der Ringkanal 4221 des Bypassventils 422 so dimensioniert, daß das über das Steuerventil 3 einströmende Druckwasser einen genügend hohen Druck auf den Kolben 41 zur Öffnungsbewegung ausübt. Nach dem Anschlag des Griffstücks 63 an der Stellschraube 44 wird das Steuerventil 3 abgesperrt; eine weitere Öffnung des Hauptventils 2 bzw. Einstellung des Verzögerungsglieds 4 ist nicht mehr möglich, so daß der Benutzer das Griffstück 63 losläßt, wobei der Stößel 6 durch die Rückstellfeder 61 in die Schließposition des Bypassventils 422 zurückgebracht wird. Nunmehr wird der Kolben 41 von der Feder 24 axial in Richtung auf den Boden 421 gedrückt, wobei über die Drosseldüse 43 das oberhalb des Steuerventils 3 befindliche Wasser in den Abflußkanal 52 des Armaturenkörpers 5 abgegeben wird. Hierbei erfolgt über den vorgegebenen Zeitraum der Schließvorgang des Hauptventils 2.
Wird während des verzögerten Schließvorgangs ein sofortiges Absperren des Hauptventils gewünscht, so kann durch Antippen bzw. leichtes axiales Verschieben des Griffstücks 63 das Bypassventil 422 geöffnet werden, so daß nun kurzfristig das zwischen Kolben 41 und Boden 421 befindliche Wasservolumen über das Bypassventil 422 und den Querbohrungen 4222 in Verbindung mit dem Ringspalt 11 in den Abflußkanal 52 geleitet werden kann. Damit das Verbindungsstück 21 mit der Kappe 25 und dem Kolben 41 in dem Gehäuse 1 sicher axial verschiebbar gehalten ist, sind radiale Führungsrippen 19 an dem Gehäuse 1 ausgebildet, so daß einerseits eine sichere axiale Führung des Verbindungsstücks 21 gewährleistet ist und andererseits das für die Betätigung des Hauptventils 2 und das Verzögerungsglied 4 benötigte Wasservolumen abfließen kann.
Soll die Zeitdauer des Selbstschlußventils verändert werden, so wird der Gewindestift so tief in das Griffstück 63 eingeschraubt, daß ein Teilbereich des Gewindestifts 631 bei eingeschobenem Griffstück 63 in eine Öffnung 442 der Stellschraube 44 einfassen kann. Wird nun das Griffstück 63 bis zum Anschlag eingeschoben, wobei der Gewindestift 631 in eine Öffnung 442 einfaßt, so ist in dieser Position das Griffstück 63 entsprechend zu drehen, wodurch die neue Zeitdauer einstellbar ist.
Nach dem Einstellvorgang ist lediglich der Gewindestift 631 in seine neutrale Position, wie es in der Figur 1 gezeigt ist, zurückzuschrauben.

Das in Figur 5 gezeigte Ausführungsbeispiel unterscheidet sich im wesentlichen zu dem vorstehend beschriebenen durch ein zweiteiliges Gehäuse 1. Im Bereich der Durchmesserstufe ist mittels Gewinde 1c ein äußerer Gehäuseteil 1a mit dem inneren Gehäuseteil 1b verbunden. Durch die zweiteilige Ausbildung des Gehäuses 1 wird es ermöglicht, daß von dem äußeren Gehäuseteil 1a der Zylinder 42, der Stößel 6, die Stellschraube 44 und das Griffstück 63 als eine Einheit zusammengefaßt sind, so daß diese Baueinheit bei Reparaturen komplett von dem inneren Gehäuseteil 1b abgenommen werden kann. Hierbei ist es nicht erforderlich, das Druckwasser von der Versorgungsleitung abzusperren, da in dem inneren Gehäuseteil 1b das Hauptventil 2 mit dem Steuerventil 3 verbleibt. Hierdurch ist es sogar möglich, das Steuerventil 3 bei anstehendem Wasserdruck auszuwechseln, wie es in Versuchen festgestellt wurde. Dabei ist es zweckmäßig, wenn in dem Steuerkanal 31 ein radial vorstehender Steg 32 ausgebildet ist, der als Prallplatte für das durchtretende Druckwasser wirkt und somit verhindert, daß bei entferntem Steuerventil 3 ein gerichteter Wasserstrahl aus dem Kolben 41 austritt.
Außerdem wurde festgestellt, daß mit einer konischen Einsenkung 64 an der Stirnseite des Stößels 6, von der die vorstehende Stirnseite der Ventilstange 34 des Steuerventils 3 aufgenommen wird, ein Verschleiß des Steuerventils 3 vermindert werden kann. Im übrigen entspricht dieses Ausführungsbeispiel der Bauweise und der Funktion des in der Figur 1 bis 4 dargestellten Selbstschlußventils.

## Patentansprüche

1. Selbstschlußventil zur Wasserauslaufsteuerung, insbesondere für sanitäre Einrichtungen, mit einem in einen Armaturenkörper (5) einsetzbaren Gehäuse (1), in welchem ein Hauptventil (2) und ein Steuerventil (3) vorgesehen ist und das Hauptventil mit Hilfe einer Feder (24) in Schließstellung gestrammt ist, wobei
- als Verzögerungsglied ein mit dem Verschlußglied des Hauptventils verbundener Kolben (41) in einem an der einen Stirnseite mit einem Boden verschlossenen Zylinder (42) gedichtet verschiebbar ist,
- in dem Verbindungsstück zwischen dem Verschlußglied und dem Kolben ein Steuerkanal (31) zum Zuflußkanal des Armaturenkörpers ausgebildet ist, der über das Steuerventil (3) durch den Kolben (41) in den Zylinder (42) geführt ist, und parallel neben dem Steuerkanal eine Drosseldüse (43) im Kolben vorgesehen ist, die mit dem Abflußkanal des Armaturenkörpers in Verbindung steht,
- das Steuerventil mit einem axial gegen die Kraft einer Rückstellfeder (61) verschiebbaren Stößel (6) betätigbar ist,
dadurch gekennzeichnet, daß im Boden (421) des Zylinders (42) ein Bypassventil (422) vorgesehen ist, das mit einem Einschieben des Stößels (6) zu öffnen ist, wobei das Bypassventil (422) über einen oder mehrere Kanäle mit dem Abflußkanal (52) des Armaturenkörpers (5) verbunden ist.

2. Selbstschlußventil nach Anspruch 1, dadurch gekennzeichnet, daß das Bypassventil (422) einen Ringkanal (4221) koaxial zum Stößel (6) in dem Boden (421) des Zylinders (42) steuert, wobei mit einer Dichtung (62) am Stößel (6) in der Ruhestellung des Stößels (6) der Ringkanal (4221) verschlossen, in der eingeschobenen Stellung geöffnet ist.

3. Selbstschlußventil nach Anspruch 1 oder 2, dadurch gekennzeichnet, daß der Ringkanal (4221) über im Boden (421) ausgebildete Querbohrungen (4222) und zwischen der Außenwandung des Zylinders (42) und dem Gehäuse (1) vorgesehenen Längsschlitze oder einem umlaufenden Ringspalt (11) mit dem Abflußkanal (52) des Armaturenkörpers (5) verbunden sind.

4. Selbstschlußventil nach Anspruch 2 oder 3, dadurch gekennzeichnet, daß der Außendurchmesser des Ringkanals (4221) etwa das 1,02fache des Durchmessers des Stößels (6) beträgt, wobei der Durchmesser des Kolbens (41) etwa dem fünffachen Durchmesser des Stößels (6) entspricht.

5. Selbstschlußventil nach einem der Ansprüche 1 bis 4, dadurch gekennzeichnet, daß der Zylinder (42) in das Gehäuse (1) mittels Gewinde (12) eingeschraubt und zum Gehäuse (1) mit wenigstens einem Rundschnurring (13) gedichtet ist.

6. Selbstschlußventil nach einem der Ansprüche 1 bis 5, dadurch gekennzeichnet, daß das Gehäuse (1) rotationssymmetrisch und gestuft ausgebildet ist, wobei in dem im Durchmesser vergrößerten Bereich der Zylinder (42) einsetzbar ist, während der im Durchmesser sprungartig verjüngte Bereich mittels Gewinde (15) in die genormte Öffnung des Armaturenkörpers (5) einschraubbar ist, und an der in den Armaturenkörper (5) einbringbaren Stirnseite des Gehäuses (1) eine Dichtung (16) konzentrisch zum Ventilsitz (17) des Hauptventils (2) angeordnet ist, derart, daß im eingeschraubten Zustand die Dichtung (16) an einem dem Zuflußkanal (51) umfassenden Ventilsitz (53) des Armaturenkörpers (5) anliegt und den Zuflußkanal (51) mit dem Gehäuse (1) gedichtet verbindet.

7. Selbstschlußventil nach einem der Ansprüche 1 bis 6, dadurch gekennzeichnet, daß an der äußeren Stirnseite des Bodens (421) eine Ringnut (4211) ausgebildet ist, in derem Grund sich eine Rückstellfeder (61) für den Stößel (6) abstützt und an deren Seitenwandung eine Stellschraube (44) axial verstellbar angeordnet ist, mit der die Eindrücktiefe eines Griffstücks (63) und damit die Zeitdauer für den Schließvorgang einstellbar ist.

8. Selbstschlußventil nach Anspruch 7, dadurch gekennzeichnet, daß das Griffstück (63) glockenförmig ausgebildet ist und mit seiner Seitenwandung das Gehäuse (1) umgreift, wobei die Stellschraube (44) einen vorstehenden Ringbund (441) aufweist, in dem wenigstens eine Öffnung (442) vorgesehen ist, derart, daß ein koaxial zur Öffnung (442) im Griffstück (63) vorgesehener Gewindestift (631) für den Vorgang der Schließdauereinstellung soweit in das Griffstück (63) zu drehen ist, bis das herausstehende Ende des Gewindestiftes (631) bei eingeschobenem Griffstück (63) in die Öffnung (442) eingreift, so daß durch Drehung des Griffstücks (63) in dieser Position die Einstellung der Zeitdauer für den Schließvorgang ermöglicht ist.

9. Selbstschlußventil nach einem der Ansprüche 1 bis 8, dadurch gekennzeichnet, daß das Gehäuse (1) am äußeren Bereich einen Ringbund (14) aufweist, der von dem Mantelbereich eines Griffstücks (63) umgriffen ist, wobei das Griffstück (63) einerseits mit dem Stößel (6) gekoppelt ist und andererseits, insbesondere zur vandalensicheren Halterung, auf dem Gehäuse (1) am stirnseitigen Mantelbereich einen radial nach innen vorspringenden, vorzugsweise mit Gewinde (6321) befestigbaren Sicherungsring (632) hat, der im Zusammenwirken mit einer Stirnseite des Ringbundes (14) ein Abziehen des Griffstücks (63) vom Gehäuse (1) verhindert.

10. Selbstschlußventil nach einem der Ansprüche 1 bis 9, dadurch gekennzeichnet, daß als Verschlußglied des Hauptventils (2) eine Kappe (25) mit einem Innenbund (251) und einer Dichtscheibe (26) in eine Ringnut (221) des Verbindungsstücks (21) einsprengbar ist, wobei die Kappe (25) an der stromaufwärts gelegenen Stirnseite ein Sieb (33) zum Schutz des Steuerkanals (31) trägt.

11. Selbstschlußventil nach einem der Ansprüche 1 bis 10, dadurch gekennzeichnet, daß an der Stirnseite des Stößels (6) eine konische Einsenkung (64) zur Zentrierung der Ventilstange (34) des Steuerventils (3) vorgesehen ist.

12. Selbstschlußventil nach einem der Ansprüche 1 bis 10, dadurch gekennzeichnet, daß das Gehäuse (1) aus einem äußeren Gehäuseteil (1a) und einem inneren Gehäuseteil (1b) im Bereich der Durchmesserstufe, vorzugsweise mittels Gewinde (1c), gedichtet verbindbar ist, so daß der äußere Gehäuseteil (1a) mit dem Zylinder (42), dem Stößel (6), dem Griffstück (63), der Rückstellfeder (61), der Stellschraube (44) als Baueinheit mit einer aus dem inneren Gehäuseteil (1b), dem Kolben (41), dem Steuerventil (3) und dem Hauptventil (2) bestehenden Baueinheit zusammenfügbar oder trennbar ist.

13. Selbstschlußventil nach einem der Ansprüche 1 bis 12, dadurch gekennzeichnet, daß in den Steuerkanal (31) stromaufwärts vor dem Steuerventil (3) ein radial in den Steuerkanal (31) ragender Steg (32) vorgesehen ist.

## Claims

1. Self-closing valve for water outflow control, especially for sanitary installations, having a housing (1) which can be inserted into a fitment body (5) and in which a main valve (2) and a control valve (3) are provided and the main valve is urged tight into the closed position by means of a spring (24), wherein
- as retarding member a piston (41) connected to the closure member of the main valve is displaceable, sealed, in a cylinder (42) closed by a base at one end,
- in the connecting piece between the closure member and the piston, a control channel (31) to the inflow channel of the fitment body is formed which by way of the control valve (3) is led through the piston (41) into the cylinder (42), and, parallel and close to the control channel, a constriction nozzle (43), which communicates with the outflow channel of the fitment body, is provided in the piston,
- the control valve is arranged to be actuated by a plunger (6) displaceable axially against the force of a return spring (61),
characterised in that in the base (421) of the cylinder (42) a bypass valve (422) is provided which is to be opened by pushing-in of the plunger (6), the bypass valve (422) being connected by way of one or more channels to the outflow channel (52) of the fitment body (5).

2. Self-closing valve according to Claim 1, characterised in that the bypass valve (422) controls an annular channel (4221) coaxial with the plunger (6) in the base (421) of the cylinder (42), the annular channel (4221) being closed by a seal (62) on the plunger (6) in the rest position of the plunger (6) and opened in the pushed-in position.

3. Self-closing valve according to Claim 1 or 2, characterised in that the annular channel (4221) is connected to the outflow channel (52) of the fitment body (5) by way of transverse bores (4222), formed in the base (421), and longitudinal slots, provided between the outer wall of the cylinder (42) and the housing (1), or a circumferential annular gap (11).

4. Self-closing valve according to Claim 2 or 3, characterised in that the outside diameter of the annular channel (4221) is approximately 1.02 times the diameter of the plunger (6), the diameter of the piston (41) corresponding approximately to five times the diameter of the plunger (6).

5. Self-closing valve according to one of Claims 1 to 4, characterised in that the cylinder (42) is screwed into the housing (1) by means of a screw thread (12) and is sealed to the housing (1) by at least one O-ring (13).

6. Self-closing valve according to one of Claims 1 to 5, characterised in that the housing (1) is rotationally symmetrical and stepped, the cylinder (42) being arranged to be inserted in the region of enlarged diameter, while the region abruptly reduced in diameter is arranged to be screwed by means of a screw thread (15) into the standardised opening of the fitment body (5), and on the end of the housing (1) that can be introduced into the fitment body (5) a seal (16) is arranged concentric with the valve seat (17) of the main valve (2), in such a way that in the screwed-in state the seal (16) bears against a valve seat (53), surrounding the inflow channel (51), of the fitment body (5) and sealingly connects the inflow channel (51) to the housing (1).

7. Self-closing valve according to one of Claims 1 to 6, characterised in that on the outer end of the base (421) there is formed an annular groove (4211) in the bottom of which bears a return spring (61) for the plunger (6) and on the side wall of which there is arranged to be axially displaceable an adjusting screw (44) with which the depth of action of a grip piece (63), and thus the time taken for the closing operation, can be adjusted.

8. Self-closing valve according to Claim 7, characterised in that the grip piece (63) is bell-shaped and with its side wall engages round the housing (1), the adjusting screw (44) having a projecting annular collar (441) in which at least one opening (442) is provided in such a way that a threaded pin (631), provided coaxially with the opening (442) in the grip piece (63), for the operation of adjusting the time taken for closure, is to be screwed into the grip piece (63) until the protruding end of the threaded pin (631) engages in the opening (442) when the grip piece (63) is pushed in, so that rotation of the grip piece (63) in this position makes it possible to adjust the time taken for the closing operation.

9. Self-closing valve according to one of Claims 1 to 8, characterised in that the housing (1) has on the outer region an annular collar (14) round which engages the outer region of a grip piece (63), the grip piece (63) on the one hand being coupled to the plunger (6) and, on the other hand, especially for vandal-proof securing, having on the housing (1), on the outer region at the end, a securing ring (632) which projects radially inwards and is arranged to be secured preferably by a screw thread (6321), and which in co-operation with an end of the annular collar (14) prevents the grip piece (63) from being pulled off the housing (1).

10. Self-closing valve according to one of Claims 1 to 9, characterised in that, as the closure member of the main valve (2), a cap (25), with an inner collar (251) and a sealing disc (26), is arranged to be sprung into an annular groove (221) of the connecting piece (21), the cap (25) bearing at the upstream end a filter (33) to protect the control channel (31).

11. Self-closing valve according to one of Claims 1 to 10, characterised in that at the end of the plunger (6) a conical depression (64) is provided for centring the valve rod (34) of the control valve (3).

12. Self-closing valve according to one of Claims 1 to 10, characterised in that the housing (1), consisting of an outer housing part (1a) and an inner housing part (1b), is arranged to be sealingly connected, preferably by means of a screw thread (1c), in the region of the step in diameter, so that the outer housing part (1a), with the cylinder (42), the plunger (6), the grip piece (63), the return spring (61), and the adjusting screw (44), as a constructional unit, can be assembled with, or separated from, a constructional unit consisting of the inner housing part (1b), the piston (41), the control valve (3) and the main valve (2).

13. Self-closing valve according to one of Claims 1 to 12, characterised in that in the control channel (31), upstream of the control valve (3), a rib (32) projecting radially into the control channel (31) is provided.

## Revendications

1. Soupape à fermeture automatique pour la commande d'une sortie d'eau, en particulier pour installations sanitaires, avec un boîtier (1) qui peut être monté sur un corps de tuyauterie (5), boîtier dans lequel est prévu une soupape principale (1) et une soupape de commande (3) et dans lequel la soupape principale est bandée en position de fermeture à l'aide d'un ressort (24),
- un piston (41) relié à l'organe de fermeture de la soupape principale, piston faisant office d'organe de temporisation, pouvant être poussé de façon étanche dans un cylindre (42), fermé sur l'une des faces frontales par un fond,
- un canal de commande (31) étant constitué dans la pièce de liaison située entre l'organe de fermeture et le piston, canal de commande allant au canal d'écoulement du corps de tuyauterie, qui va, via la soupape de commande (23), à travers le piston (41) au cylindre (42) et une buse d'étranglement (43) étant prévue dans le piston en liaison avec le canal d'écoulement du corps de tuyauterie,
- la soupape de commande pouvant être actionnée par un poussoir (6) pouvant être déplacé axialement à l'encontre de la force d'un ressort de rappel (61),
soupape à fermeture automatique caractérisée en ce que dans le fond (421) du cylindre (42), est prévu une soupape de dérivation (422), qui s'ouvre par un enfoncement du poussoir (6), la soupape de dérivation (422) étant reliée au moyen d'un ou de plusieurs canaux au canal d'évacuation (52) du corps de tuyauterie (5).

2. Soupape à fermeture automatique selon la revendication 1, caractérisée en ce que la soupape de dérivation (422) commande un canal annulaire (4221) qui est coaxial au poussoir (6) dans le fond (421) du cylindre (42), le canal annulaire (4221) étant fermé par un joint d'étanchéité (62) sur le poussoir (6) quand celui-ci est en position de repos, et étant ouvert quand le poussoir est en position enfoncée.

3. Soupape à fermeture automatique selon la revendication 1 ou 2, caractérisée en ce que le canal annulaire (4221) est relié au canal d'évacuation (52) du corps de tuyauterie (5) par des alésages transversaux (4222), constitués dans le fond (421), et des fentes longitudinales ou un interstice annulaire (11), faisant tout le tour, prévus entre la paroi extérieure du cylindre (42) et le boîtier (1).

4. Soupape à fermeture automatique selon la revendication 2 ou 3, caractérisée en ce que le diamètre extérieur du canal annulaire (4221) atteint environ 1,02 fois le diamètre du poussoir (6), le diamètre du piston (41) correspondant à peu près à cinq fois le diamètre du poussoir (6).

5. Soupape à fermeture automatique, selon l'une des revendications 1 à 4, caractérisée en ce que le cylindre (42) est vissé dans le boîtier (1) au moyen d'un filetage (12) et l'étanchéité est assurée par rapport au boîtier (1) au moyen d'au moins un joint torique rond (13).

6. Soupape à fermeture automatique selon une des revendications 1 à 5, caractérisée en ce que le boîtier (1) est symétrique de révolution et est constitué à gradins, le cylindre (42) pouvant être monté dans la zone dont le diamètre est agrandi, tandis que la zone dont le diamètre est brusquement rétréci peut être vissée au moyen du filetage (15) dans l'orifice normalisé du corps de tuyauterie (5), et qu'un joint d'étanchéité (16) est disposé de façon concentrique par rapport au siège (17) de la soupape principale (2) sur la face frontale du boîtier (1), face qui peut être mise dans le corps de tuyauterie (5), d'une manière telle qu'en position vissée, le joint d'étanchéité (16) repose sur un siège de soupape, entourant le canal d'évacuation (51) du corps de tuyauterie (5) et relie de façon étanche le canal d'évacuation (51) au boîtier (1).

7. Soupape à fermeture automatique selon l'une des revendications 1 à 6, caractérisée en ce que sur la face frontale extérieure du fond (421) on constitue une rainure annulaire (4211), dans le fond de laquelle s'appuie un ressort de rappel (61) du poussoir (6) et sur la paroi latérale de laquelle est disposée une vis de réglage (44) que l'on peut régler axialement, et avec laquelle on peut régler la profondeur d'enfoncement d'une pièce (63) de venue en prise et de cette façon on peut régler la durée du processus de fermeture.

8. Soupape à fermeture automatique selon la revendication 7, caractérisée en ce que la pièce de venue en prise (63) est constituée avec une forme de cloche et vient en prise par sa paroi latérale autour du boîtier (1), la vis de réglage (44) présentant un collet annulaire saillant (441), dans lequel on prévoir au moins une ouverture (442) d'une manière telle qu'on puisse faire tourner une tige filetée (631) prévue de façon coaxiale par rapport à l'ouverture (442) dans la pièce de venue en prise (63) pour le processus de réglage de la durée de la fermeture dans la pièce de venue en prise (63) jusqu'à ce que l'extrémité de la tige filetée (631), qui sort, vienne en prise, quand la pièce de venue en prise (63) est enfoncée, dans l'ouverture (442) de telle sorte que l'on puisse effectuer le réglage de la durée du processus de fermeture en faisant tourner la pièce de venue en prise (63) dans cette position.

9. Soupape à fermeture automatique selon l'une des revendications 1 à 8, caractérisée en ce que le boîtier (1) présente sur la zone extérieure un collet annulaire (14), sur lequel vient en prise la zone de l'enveloppe d'une pièce de venue en prise (63), cette de venue en prise (63) étant couplée d'une part au poussoir (6) et ayant d'autre part, en particulier pour une fixation à l'abri du vandalisme, sur le boîtier (1) sur la zone enveloppe située du côté frontal une bague de sécurité (632) qui fait saillie radialement vers l'intérieur, et qui peut être fixée de préférence avec le filetage (6321), bague de sécurité qui empêche en coopération avec une face frontale du collet annulaire (14) un retrait de la pièce de vanne en prise (63) du boîtier (1).

10. Soupape à fermeture automatique selon l'une des revendications 1 à 9, caractérisée en ce que l'on peut clipser comme organe de fermeture de la vanne principale (2) un chapeau (25) avec un collet intérieur (251) et une rondelle d'étanchéité (26) dans une rainure annulaire (221) de la pièce de liaison (21), le chapeau (25) portant sur la face frontale mise en amont un tamis (33) pour protéger le canal de commande (31).

11. Soupape à fermeture automatique selon l'une des revendications 1 à 10, caractérisée en ce que la face frontale du poussoir (6), on prévoit un renforcement conique (64) qui sert au centrage de la tige (34) de la soupape de commande (3).

12. Soupape à fermeture automatique selon l'une des revendications 1 à 10, caractérisée en ce que le boîtier (1), qui se compose d'une partie extérieure de boîtier (1a) et d'une partie intérieure de boîtier (1b), peut être relié de façon étanche dans la zone à gradins, de préférence au moyen d'un filetage (1c) de telle façon que la partie extérieure du boîtier (1a) puisse être réunie ou séparée par le cylindre (42), le poussoir (6), la pièce de venue en prise (63), le ressort de rappel (61), la vis de réglage (44), formant un ensemble constructif d'avec un ensemble constructif se composant de la partie intérieure du boîtier (1b), du piston (41), de la soupape de commande (3) et de la soupape principale (2).

13. Soupape à fermeture automatique selon l'une des revendications 1 à 12, caractérisée en ce que dans le canal de commande (31), on prévoit en amont avant la soupape de commande (3) une saillie (32), qui avance radialement dans le canal de commande (31).
